# EUROPEAN PATENT SPECIFICATION

(11) **EP 3 816 464 B1**
(45) Date of publication and mention of the grant of the patent: **23.10.2024**
(21) Application number: 20190974.4
(22) Date of filing: 13.08.2020
(51) Int. Cl.: F16B 37/14, B60B 3/16

(54) **A SCREW CAP**
SCHRAUBKAPPE
BOUCHON À VIS

(30) Priority: 04.11.2019 EP 19382959
(43) Date of publication of application: 05.05.2021
(73) Proprietor: Illinois Tool Works INC., Glenview, IL 60025 (US)
(72) Inventor: CRIADO, Francisco, 08290 Cerdanyola del Vallès (ES); CUERVAS, Francisco, 08191 Rubi (ES); CIPRES BALLESTER, Ivan, 38112 Braunschweig (DE)
(74) Representative: HGF

(56) References cited:
- EP-A2- 1 312 812
- EP-A2- 2 014 934
- WO-A1-2018/229446
- JP-A- 2003 278 732
- JP-A- 2019 108 906
- US-A1- 2017 363 136

## Description

### Technical Field of Invention

The invention concerns a screw cap for covering wheel screws including wheel fasteners, such as wheel bolts, and anti-theft wheel fasteners. In particular, present invention relates to a screw cap suitable for installation with two different screw head types.

The screw cap of the present invention is generally used in the automotive industry, for example, the screw cap may be installed onto wheel fasteners and anti-theft wheel fasteners of cars, vans, heavy goods vehicles, buses and the like.

### Background

A screw cap is a device that covers and protects a head of a wheel screw, for example, simple wheel fasteners, but also anti-theft wheel fasteners, in use. The screw cap serves to protect the wheel screws from external debris, dirt, adverse whether conditions and the like, but may also function as an aesthetic improvement.

In some applications, for example in the automotive industry, it is necessary to protect the head of wheel screws. Wheel screws generally include wheel fasteners, including bolts, screws, nuts and the like, and serve to affix a wheel of a vehicle to a wheel hub of a vehicle. Some screw sets for wheels may include at least one anti-theft wheel fasteners, which are substantially similar to wheel fasteners, except that they include a specifically designed head that can only be used with a corresponding key for installation or removal of the anti-theft wheel fasteners. The key and the head of an anti-theft wheel fastener are generally unique. Commonly, each wheel may include a single anti-theft wheel fastener, and a plurality of normal wheel fasteners (i.e. normal screw heads). In this way, the anti-theft wheel fastener prevents theft of the wheel from the vehicle.

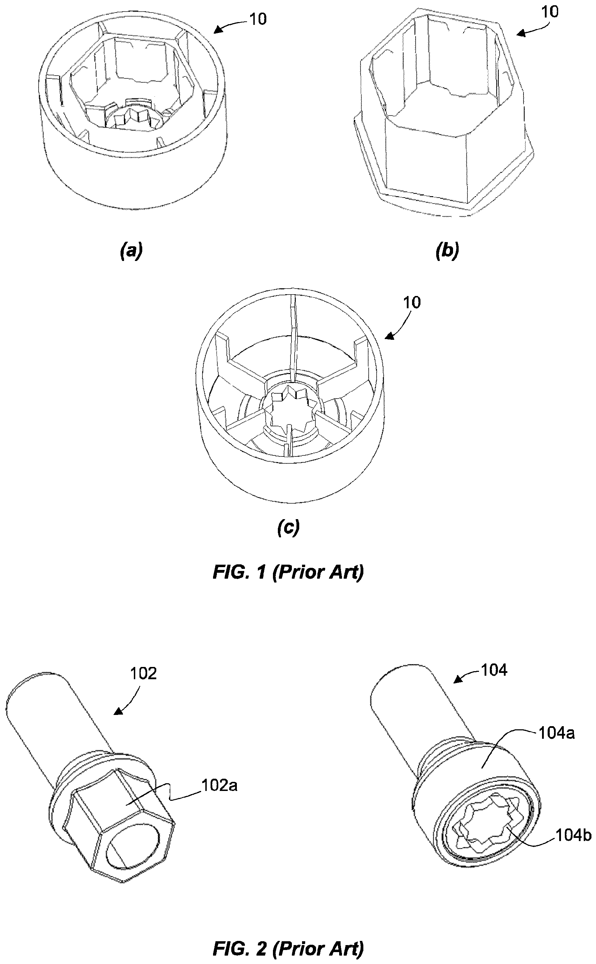

It is generally known in the art to provide a screw cap to protect a head of a wheel fastener. For example, as shown in Figures 1(a) and 1(b), a screw cap 10 having a generally hexagonal engaging portion may be used to affix the screw cap to a hexagonal head of a wheel fastener. It is also generally known in the art to provide another, separate, screw cap to protect the head of the anti-theft wheel fastener. For example, as shown in Figure 1(c), a screw cap 10 having a generally cylindrical engaging portion may be used to affix the screw cap to a circular head of an anti-theft wheel fasteners. In this way, two different screw caps are required to protect wheel fasteners and anti-theft wheel fasteners. However, having to use two separate screw caps in order to protect the screw head of the wheel fastener as well as the anti-theft wheel fastener can be cumbersome to the user, but may also increase the expense to the user, because two different types of screw caps have to be acquired. Further, manufacturing time and costs may be increased as it is necessary to manufacture two different designs of screw caps for each wheel. In addition, the design of the wheel fastener screw cap and the anti-theft wheel fastener screw cap are may differ in look as well as function, and so the user may perceive a difference, aesthetically and/or functionally, between the two types of screw caps once installed.

JP 2019108906 discusses a nut cap capable of being attached to various kinds of nuts of different sizes.

Therefore, it is an object of the present invention to provide an improved screw cap that can be used with two different screw heads. In particular, the present invention proposes a single screw cap that can be used with two types of screw head. More particularly, the screw cap can be used with both wheel fastener screw heads and anti-theft wheel fastener screw heads. More particularly, the present invention proposes a screw cap that reduces manufacturing time, costs and is more aesthetically suitable for the end user.

### Summary

Aspects of the invention are set out in the independent claim. Dependent claims describe optional features.

In one aspect, there is provided a screw cap for a screw head, comprising a tubular body, having an end wall at a distal end portion and an opening at a proximal end portion along a centre axis; at least one first coupling member arranged coaxially to said centre axis at said distal end portion, adapted to retainingly receive at least a portion of a first-type screw head; and at least one second coupling member arranged coaxially with, and axially proximal to, said at least one first coupling member, adapted to retainingly receive at least a portion of a second-type screw head.

This provides the advantage that a single screw cap can be manufactured and installed to accommodate two types of wheel screw head. In particular, this provides the advantage that a single screw cap may be manufactured and installed to accommodate both a head of a wheel fastener and a head of an anti-theft wheel fasteners.

According to the invention, said at least one first coupling member comprises at least one first radial wall member and at least one second surrounding wall member arranged concentric to and facing said first surrounding wall member, said at least one first surrounding wall member and said at least one second surrounding wall member protruding from said end wall towards said proximal end portion along said centre axis, so as to form a substantially annularly shaped recess coaxial with said tubular body and adapted to matingly receive at least a portion of the first-type screw head.

This provides the advantage that a first-type screw head is tightly secured to the screw cap, in use.

Advantageously, said substantially annularly shaped recess is configured to provide a friction fit with at least a portion of the first-type screw head.

This provides the advantage that the screw cap can be easily be installed to, and removed from, the first-type screw head.

According to the invention, said second coupling member comprises at least two circumferentially spaced apart rib members, each rib member extending radially inwardly from an inner surface of said tubular body so as to couplingly engage with at least a portion of the second-type screw head, during use.

According to the invention, said at least two rib members are adapted to provide a friction fit with at least a portion of the second-type screw head, during use.

Advantageously, the screw cap comprises at least six circumferentially equidistantly spaced apart rib members.

Advantageously, the diameter defined by the circumferentially spaced apart rib members is greater than the diameter defined by the annularly shaped recess.

This provides the advantage that the screw cap accommodates differences in shape, specifically diameter. In this way, each screw cap installed to a wheel screw on a wheel of a vehicle appears substantially identical in height and form once installed, irrespective of the wheel screw to which the screw cap is affixed.

Advantageously, the first-type screw head is a hexagonal screw head.

Advantageously, the second-type screw head is a circular screw head.

Advantageously, the screw cap comprises a resilient material.

Advantageously, the screw cap comprises a polymer material.

Advantageously, the end wall comprises a central bore adapted to receive a corresponding tool key.

### Brief Description of the Drawings

Example embodiment(s) of the invention are now described, by way of example only, hereinafter with reference to the accompanying drawings, in which:
**Figure 1** **(Prior Art)** shows a perspective view of (a) a typical screw cap for installing onto a head of a wheel screw, for example a wheel fastener, (b) another typical screw cap for installing onto a head of a wheel screw, for example a wheel fastener, and (c) a typical screw cap for installing onto a head of another wheel screw, for example an anti-theft wheel fastener;
**Figure 2** **(Prior Art)** shows a perspective view of (a) a known wheel fastener and (b) a known anti-theft wheel fastener that can be used with the screw cap of the present invention;
**Figure 3** shows a side view of (a) a wheel fastener and an anti-theft wheel fastener prior to installation of a screw cap of the present invention and (b) the wheel fastener and anti-theft wheel fastener of (a) after installation of a screw cap of the present invention;
**Figure 4** shows a cross-sectional view in perspective of a screw cap according to one example embodiment, the screw cap including a partial of an installed wheel fastener;
**Figure 5** shows another cross-sectional view of the screw cap of Figure 4; and
**Figure 6** shows another cross-sectional view of the screw cap of Figures 4 and 5, the screw cap including a representation of an installed anti-theft wheel fastener.

### Detailed Description

The described example embodiment relates to a screw cap, and in particular a screw cap which can be installed onto two different types of screw heads. More particularly, the screw cap can be installed onto both a head of a wheel fastener and a head of an-anti theft wheel fastener.

Certain terminology is used in the following description for convenience only and is not limiting. The words 'upper' and 'lower' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. a central axis), the particular meaning being readily apparent from the context of the description. Further, the terms 'proximal' (i.e. nearer to) and 'distal' (i.e. away from) designate positions relative to a body or a point of attachment (e.g. a screw head).

Further, as used herein, the terms 'connected', `affixed' and the like are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the terms 'wheel screw', 'wheel fastener', 'screw', 'fastener' and the like may be used interchangeably. Moreover, the terms 'screw cap', 'wheel cap', 'wheel screw cap', 'wheel fastener cap' and the like may be used interchangeably.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner. Like reference numerals are used to depict like features throughout.

Referring now to Figure 2(a), a screw, or a wheel fastener 102, for example a bolt, includes a first-type screw head 102a, which is hexagonal in the depicted embodiment. The head 102a may have another shape in another embodiment. The wheel fastener 102 generally includes a threaded shank extending outwardly from the head 102a at a distal end thereof. Figure 2(b) shows another screw, or an anti-theft wheel fastener 104, for example a bolt, including a second-type screw head 104a, which is circular in the depicted embodiment. The anti-theft wheel fastener 104 generally includes a threaded shank extending outwardly from the head 104a at a distal end thereof.

The first-type screw head 102a and the second-type screw head 104a are different. The head 104a includes a cut-out 104b for engaging with a corresponding tool key (not shown) in use, thereby allowing the user to install or remove the anti-theft wheel fastener 104. The head 104a and the cut-out 104b may have another shape in another embodiment. The wheel fastener 102 and the anti-theft wheel fastener 104, or indeed other appropriate screw means having any other appropriate shape or size, may be used with the screw cap of the present invention.

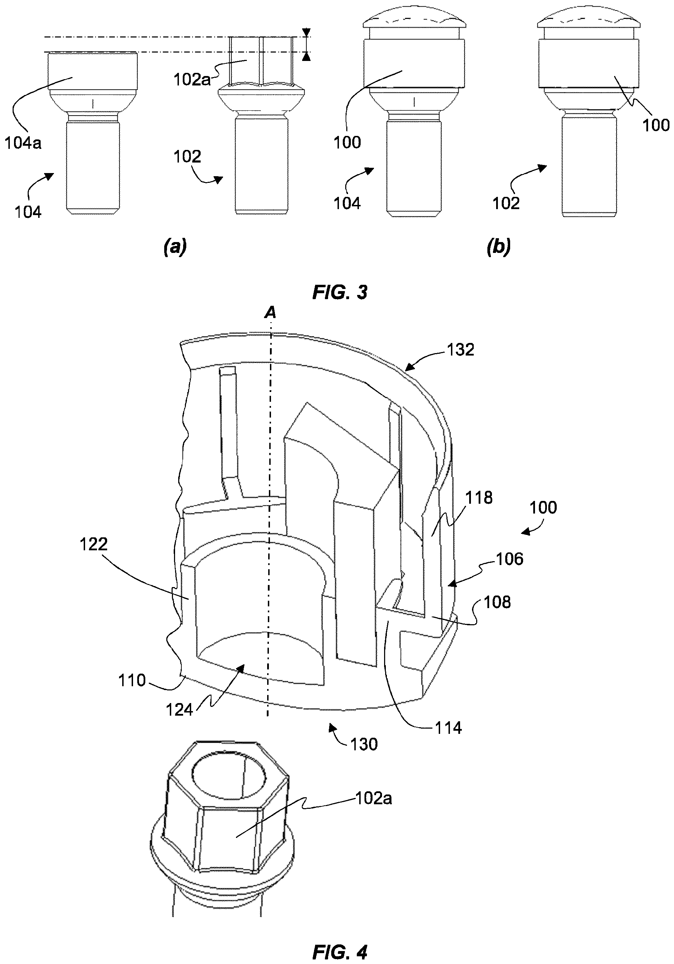

As shown in Figure 3(a), the head 102a of the wheel fastener 102 (i.e. wheel screw) may have a greater height than that of the head 104a of the anti-theft wheel fastener 104 (i.e. anti-theft screw). The difference between the height of each fastener 102, 104 is indicated by the double-headed arrow in Figure 3(a). In use, a screw cap 100 according to the invention, is placed over the head 102a, 104a of each fastener 102, 104 and pushed towards a threaded end of the respective fastener 102, 104 to attach the screw cap 100 to the fasteners 102, 104 as shown in Figure 3(b). The screw cap 100 may generally be a push-fit or a friction-fit with respect to the respective fastener 102, 104. Additionally, as discussed in more detail below, the screw cap 100 is configured to accommodate the difference in height, diameter or shape of the heads 102a, 104a of the fasteners 102, 104 such that, after installation, the screw cap 100 provides a standardized visual appearance, as shown in Figure 3(b).

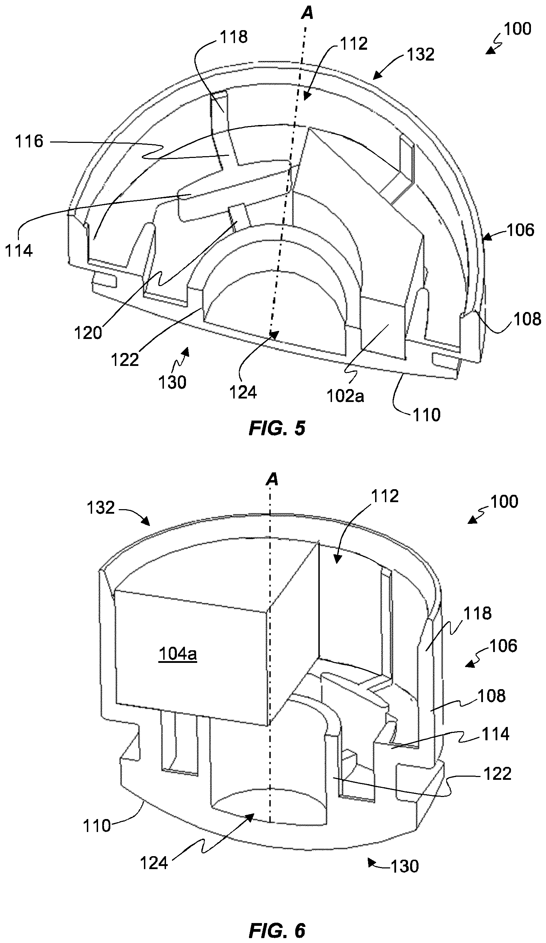

Referring to Figures 4 to 6, the screw cap 100 includes a generally tubular body 106 having a side wall 108. The body 106 of the present example is shown as a generally round tubular shape, but other shapes are contemplated in other embodiments. The body 106 includes an end wall 110 at a first, distal, end portion 130 and an opening 112 at a second, proximal, end portion 132. The proximal end portion 132 is generally formed at one end of a centre axis A, and the distal end portion 130 is generally formed to the other end of the centre axis A. In use, the end wall 110 is the outermost portion of the screw cap 100, i.e. furthest away from the screw head, after installation.

The body 106 includes a first coupling member including a plurality of first surrounding wall members 114. Additionally, the screw cap 100 includes a generally cylindrical upstanding wall 122 located proximal the centre axis A of the screw cap 100 and internally of the first surrounding wall members 114. The upstanding wall 122 may be any shape. The upstanding wall 122 extends towards the open end 112 of the body 106 from the end wall 110. The upstanding wall 122 and the first surrounding wall members 114 generally define a substantially annularly shaped recess that is coaxial with the centre axis A of the body 106. Further, the upstanding wall 122 generally encloses, and defines, a central bore 124 within the end wall 110. The central bore 124 may be arranged to receive a corresponding tool key. The central bore 124 provided within the end wall 110 may be any appropriate shape. Indeed, the central bore 124 may not be provided in some embodiments, such that the end wall 110 forms a closed end of the screw cap 100.

The plurality of first surrounding I wall members 114 are arranged generally concentrically and facing the upstanding wall 122 thereby forming the substantially annularly shaped recess. In the depicted example, six first surrounding wall members 114 provided in a hexagonal arrangement are contemplated, however any number or arrangement of surrounding wall members 114 may be used in another embodiment. For example, in another embodiment, each of the surrounding wall members 114 may be formed as a unitary, or integral, component, thus providing a single surrounding wall member 114.

The side wall 108 of the body 106 also includes a second coupling member including a plurality of circumferentially spaced apart rib members 118. Each rib member 118 extends radially inwardly from an inner surface of the side wall 108 towards the centre axis A of the body 106. The second coupling member, formed by the rib members 118, is coaxial and/or concentric with respect to the first coupling member, formed by the surrounding wall members 114. In the depicted example, six rib members 118 that are equidistantly spaced apart are contemplated, however any number or arrangement of rib members 118 may be used in another embodiment.

Additionally, a plurality of first shoulder members 116 connect each of the surrounding wall members 114 to a respective rib member 118. Each first shoulder member 116 generally defines a stop for the second-type screw head, as discussed below. Moreover, a plurality of second shoulder members 120 connect each of the surrounding wall members 114 to the upstanding wall 122. Each second shoulder member 120 generally defines a stop, or provides a predetermined height, for the first-type screw head, as discussed below. In the depicted embodiment, there is provided a difference in height between the first shoulder members 116 and the second shoulder members 120. That is, the first shoulder members 116 provide a first predetermined height, and the second shoulder members 120 provide a second predetermined height, the second predetermined height being greater than the first predetermined height. The predetermined height may be measured from a respective shoulder to the opening 112 of the body 106. In this way, the screw cap 100 can accommodate differences in the height of wheel screw heads, as discussed below.

Referring to Figures 2 to 6, in use, a first-type wheel screw having a first-type screw head, for example the wheel fastener 102 as described above, is provided. The wheel fastener head 102a is generally hexagonal in the depicted embodiment, but other shapes are contemplated in other embodiments. The screw cap 100 is installed over the head 102a by pushing the screw cap 100 onto the head 102a. In this way the head 102a is clamped between the upstanding wall 122 and the plurality of surrounding I wall members 114. That is, the head 102a is secured between the upstanding wall 122 and each of the surrounding wall members 114 by a friction-fit.

In use, a second-type wheel screw having a second-type screw head, for example an anti-theft wheel fastener 104 as described above, is provided. The second-type wheel screw is different to the first-type wheel screw. More specifically, the first-type screw head is different to the second-type screw head. For example, the shape and height of the screw heads are different, as described in relation to Figure 3.

The screw cap 100 is installed over the head 104a by pushing the screw cap 100 onto the head 104a. In this way, the head 104a is clamped by the plurality of rib members 118. That is, the head 104a is secured by each of the rib members 118 by a friction-fit.

As demonstrated in Figures 3 to 6, the difference in the predetermined height of the shoulders 116, 120 accommodates a difference in height of the screw heads 102a, 104a. In this way, the visual appearance is identical after installation, such that a user does not perceive a difference between the wheel screws 102, 104.

After installation, if it is desired to remove the screw cap 100, the screw cap 100 is simply pulled in a direction opposition to that of the installation. More particularly, the central bore 124 may receive a corresponding tool key to aid removal.

The screw cap 100 may comprise any suitable material, for example, a resilient material or a polymer material. The screw cap 100 may assume any appropriate shape, size, arrangement or the like.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement, assembly or the like.

## Claims

1. A screw cap (100) for a screw head, comprising:
a tubular body (106), having an end wall (110) at a distal end portion (130) and an opening (112) at a proximal end portion (132) along a centre axis (A);
at least one first coupling member (114, 122) arranged coaxially to said centre axis (A) at said distal end portion (130), adapted to retainingly receive at least a portion of a first-type screw head (102a); and
at least one second coupling member (108, 118) arranged coaxially with, and axially proximal to, said at least one first coupling member (114, 122), adapted to retainingly receive at least a portion of a second-type screw head (104a);
wherein said at least one first coupling member comprises at least one first surrounding wall member (114), and at least one second radial wall member (122) arranged concentric to and facing said first surrounding wall member (114), said at least one first surrounding wall member (114) and said at least one second radial wall member (122) protruding from said end wall (110) towards said proximal end portion (132) along said centre axis (A), so as to form a substantially annularly shaped recess coaxial with said tubular body (106) and adapted to matingly receive at least a portion of the first-type screw head (102a);
wherein said second coupling member comprises at least two spaced apart rib members (118), each rib member (118) extending radially inwardly from an inner surface (108) of said tubular body so as to couplingly engage with at least a portion of the second-type screw head (104a), during use; and
wherein the diameter defined by the circumferentially spaced apart rib members (118) is greater than the diameter defined by the annularly shaped recess.

2. A screw cap according to claim 1, wherein said substantially annularly shaped recess is configured to provide a friction fit with at least a portion of the first-type screw head (102a).

3. A screw cap according to any preceding claim, wherein said at least two rib members (118) are adapted to provide a friction fit with at least a portion of the second-type screw head (104a), during use.

4. A screw cap according to any preceding claim, comprising at least six circumferentially equidistantly spaced apart rib members (118).

5. A screw cap according to any preceding claim, wherein the first-type screw head (102a) is a hexagonal screw head.

6. A screw cap according to any preceding claim, wherein the second-type screw head (104a) is a circular screw head.

7. A screw cap according to any preceding claim, wherein the screw cap (100) comprises a resilient material.

8. A screw cap according to any preceding claim, wherein the screw cap (100) comprises a polymer material.

9. A screw cap according to any preceding claim, wherein the end wall (110) comprises a central bore (124) adapted to receive a corresponding tool key.

## Patentansprüche

1. Schraubkappe (100) für einen Schraubenkopf, aufweisend:
einen rohrförmigen Körper (106), der eine Endwand (110) an einem distalen Endabschnitt (130) und eine Öffnung (112) an einem proximalen Endabschnitt (132) entlang einer Mittelachse (A) aufweist;
zumindest ein erstes Kopplungselement (114, 122), das koaxial zu der Mittelachse (A) an dem distalen Endabschnitt (130) angeordnet und ausgelegt ist, um zumindest einen Abschnitt eines Schraubenkopfes (102a) eines ersten Typs aufzunehmen, um diesen festzuhalten; und
zumindest ein zweites Kopplungselement (108, 118), das koaxial mit und axial proximal zu dem zumindest einen ersten Kopplungselement (114, 122) angeordnet und ausgelegt ist, um zumindest einen Abschnitt eines Schraubenkopfes (104a) eines zweiten Typs aufzunehmen, um diesen festzuhalten;
wobei das zumindest eine erste Kopplungselement zumindest ein erstes umgebendes Wandelement (114) aufweist und zumindest ein zweites radiales Wandelement (122) konzentrisch zu dem ersten umgebenden Wandelement (114) angeordnet und diesem zugewandt ist, wobei das zumindest eine erste umgebende Wandelement (114) und das zumindest eine zweite radiale Wandelement (122) von der Endwand (110) in Richtung des proximalen Endabschnitts (132) entlang der Mittelachse (A) vorstehen, um eine im Wesentlichen ringförmige Aussparung auszubilden, die koaxial zu dem rohrförmigen Körper (106) verläuft und ausgelegt ist, um zumindest einen Abschnitt des Schraubenkopfes (102a) des ersten Typs im Passsitz aufzunehmen;
wobei das zweite Kopplungselement zumindest zwei voneinander beabstandete Rippenelemente (118) aufweist, wobei sich jedes Rippenelement (118) von einer Innenfläche (108) des rohrförmigen Körpers radial nach innen erstreckt, um während des Gebrauchs mit zumindest einem Abschnitt des Schraubenkopfes (104a) des zweiten Typs in koppelnden Eingriff zu kommen; und
wobei der Durchmesser, der durch die in Umfangsrichtung beabstandeten Rippenelemente (118) definiert wird, größer als der Durchmesser ist, der durch die ringförmige Aussparung definiert wird.

2. Schraubkappe nach Anspruch 1,
wobei die im Wesentlichen ringförmige Aussparung konfiguriert ist, um eine Reibpassung mit zumindest einem Abschnitt des Schraubenkopfes (102a) des ersten Typs bereitzustellen.

3. Schraubkappe nach einem der vorhergehenden Ansprüche, wobei die zumindest zwei Rippenelemente (118) ausgelegt sind, um während des Gebrauchs eine Reibpassung mit zumindest einem Abschnitt des Schraubenkopfes (104a) des zweiten Typs bereitzustellen.

4. Schraubkappe nach einem der vorhergehenden Ansprüche, die zumindest sechs in Umfangsrichtung in gleichen Abständen voneinander beabstandete Rippenelemente (118) aufweist.

5. Schraubkappe nach einem der vorhergehenden Ansprüche, wobei der Schraubenkopf (102a) des ersten Typs ein Sechskantschraubenkopf ist.

6. Schraubkappe nach einem der vorhergehenden Ansprüche, wobei der Schraubenkopf (104a) des zweiten Typs ein Rundschraubenkopf ist.

7. Schraubkappe nach einem der vorhergehenden Ansprüche, wobei die Schraubkappe (100) ein elastisches Material aufweist.

8. Schraubkappe nach einem der vorhergehenden Ansprüche, wobei die Schraubkappe (100) ein Polymermaterial aufweist.

9. Schraubkappe nach einem der vorhergehenden Ansprüche, wobei die Endwand (110) eine mittlere Bohrung (124) aufweist, die zur Aufnahme eines entsprechenden Werkzeugschlüssels ausgelegt ist.

## Revendications

1. Bouchon à vis (100) pour une tête de vis, comprenant :
un corps tubulaire (106), ayant une paroi d'extrémité (110) au niveau d'une partie d'extrémité distale (130) et une ouverture (112) au niveau d'une partie d'extrémité proximale (132) le long d'un axe central (A) ;
au moins un premier élément de d'accouplement (114, 122) agencé coaxialement audit axe central (A) au niveau de ladite partie d'extrémité distale (130), adapté pour recevoir de manière retenue au moins une partie d'une tête de vis de premier type (102a) ; et
au moins un second élément d'accouplement (108, 118) agencé coaxialement avec ledit au moins un premier élément d'accouplement (114, 122) et axialement proche de celui-ci, adapté pour recevoir de manière retenue au moins une partie d'une tête de vis de second type (104a) ;
dans lequel ledit au moins un premier élément d'accouplement comprend au moins un premier élément de paroi environnant (114), et au moins un second élément de paroi radial (122) agencé de manière concentrique par rapport audit premier élément de paroi environnant (114) et faisant face à celui-ci, ledit au moins un premier élément de paroi périphérique (114) et ledit au moins un second élément de paroi radial (122) faisant saillie à partir de ladite paroi d'extrémité (110) vers ladite partie d'extrémité proximale (132) le long dudit axe central (A), de manière à former un évidement de forme sensiblement annulaire coaxial avec ledit corps tubulaire (106) et adapté pour recevoir par accouplement au moins une partie de la tête de vis de premier type (102a) ;
dans lequel ledit second élément d'accouplement comprend au moins deux éléments de nervure espacés (118), chaque élément de nervure (118) s'étendant radialement vers l'intérieur à partir d'une surface interne (108) dudit corps tubulaire de manière à se mettre en prise de manière accouplée avec au moins une partie de la tête de vis de second type (104a), durant l'utilisation ; et
dans lequel le diamètre défini par les éléments de nervure espacés circonférentiellement (118) est supérieur au diamètre défini par l'évidement de forme annulaire.

2. Bouchon à vis selon la revendication 1,
dans lequel ledit évidement de forme sensiblement annulaire est configuré pour fournir un ajustement par friction avec au moins une partie de la tête de vis de premier type (102a).

3. Bouchon à vis selon l'une quelconque des revendications précédentes, dans lequel lesdits au moins deux éléments de nervure (118) sont adaptés pour fournir un ajustement par friction avec au moins une partie de la tête de vis de second type (104a), durant l'utilisation.

4. Bouchon à vis selon l'une quelconque des revendications précédentes, comprenant au moins six éléments de nervure (118) espacés de manière équidistante circonférentiellement.

5. Bouchon à vis selon l'une quelconque des revendications précédentes, dans lequel la tête de vis de premier type (102a) est une tête de vis hexagonale.

6. Bouchon à vis selon l'une quelconque des revendications précédentes, dans lequel la tête de vis de second type (104a) est une tête de vis circulaire.

7. Bouchon à vis selon l'une quelconque des revendications précédentes, dans lequel le bouchon à vis (100) comprend un matériau élastique.

8. Bouchon à vis selon l'une quelconque des revendications précédentes, dans lequel le bouchon à vis (100) comprend un matériau polymère.

9. Bouchon à vis selon l'une quelconque des revendications précédentes, dans lequel la paroi d'extrémité (110) comprend un alésage central (124) adapté pour recevoir une clé d'outil correspondante.
